# EUROPÄISCHE PATENTSCHRIFT

(11) **EP 0 875 522 B1**
(45) Veröffentlichungstag und Bekanntmachung des Hinweises auf die Patenterteilung: **04.02.2004**
(21) Anmeldenummer: 98104354.0
(22) Anmeldetag: 11.03.1998
(51) Int. Cl.: C08J 5/12

(54) **Verfahren zur Herstellung eines Verbundwerkstoffes aus Polyamiden und Fluorelastomeren**
Production process for Polyamide fluoroelastomer composites
Procédé de production d'une matière composite à base de polyamides et d'un élastomère fluoré

(30) Priorität: 02.05.1997 DE 19718504
(43) Veröffentlichungstag der Anmeldung: 04.11.1998
(73) Patentinhaber: Degussa AG, 40474 Düsseldorf (DE)
(72) Erfinder: Grosse-Puppendahl, Thomas, 45721 Haltern (DE); Schmidt, Friedrich Georg, Dr., 45721 Haltern (DE)

(56) Entgegenhaltungen:
- EP-A- 0 767 190
- DE-A- 2 510 096
- CHEMICAL ABSTRACTS, vol. 112, no. 8, 19. Februar 1990 Columbus, Ohio, US; abstract no. 58070, XP002075694 & JP 01 177 447 A (TOYODA GOSEI CO. LTD)

## Beschreibung

Die Erfindung betrifft ein Verfahren zur Herstellung eines festen Verbundes zwischen einem harten Teilstück, das aus einer Formmasse auf Basis von Polyamid besteht, und einem weichen Teilstück aus einem vulkanisierten Fluor-Elastomer. Gegenstand der Erfindung sind auch die nach diesem Verfahren erhaltenen Gegenstände.

Verbundwerkstoffe aus thermoplastisch steifen und gummielastischen Formstoffen werden üblicherweise durch Kleben, Verschrauben, mechanisches Verkrallen oder unter Verwendung eines Haftvermittlers zusammengefügt. In neuerer Zeit sind interessante Verfahren zur Herstellung von Verbunden aus einem Formkörper auf Basis von Polyamid einerseits und einem Vulkanisat andererseits entwickelt worden. So wird in EP-A-0 344 427 ein Verbund aus Polyamid und einem carboxyl- bzw. anhydridgruppenhaltigen Kautschuk hergestellt, während in der EP-A-0 629 653 das Kautschukcompound ein ungesättigtes Silan enthält. Die erzielten Haftfestigkeitswerte sind beachtlich; das Verfahren ist jedoch mit einigen Nachteilen behaftet So kann bei einer höheren Konzentration von reaktiven Gruppen im Kautschukcompound eine unerwünschte Haftung an der bei der Vulkanisation üblicherweise verwendeten Metallform auftreten. Für bestimmte Anwendungszwecke ist es darüber hinaus äußerst nachteilig, daß die Beständigkeit der verwendeten Elastomere gegenüber Ölen, Fetten, Lösemitteln und Kraftstoffen, wie z. B. Superbenzin, Diesel oder alkoholhaltigen Kraftstoffen, insbesondere bei höheren Temperaturen unbefriedigend ist.

Somit liegen der Erfindung, ausgehend vom obengenannten Stand der Technik, folgende Aufgaben zugrunde:
- Es sollte ein handelsüblicher Kautschuk eingesetzt werden, der nicht extra funktionalisiert oder modifiziert werden muß und auch keine speziellen Zusätze an reaktiven Agenzien benotigt;
- die Verbundkörper sollten im Herstellprozeß keine störende Adhäsion an der Formenwandung aufweisen und somit problemlos entformt werden können;
- darüber hinaus sollte das Vulkanisat in einem weiten Temperaturbereich beständig gegenüber Ölen, Fetten, Lösemitteln und Kraftstoffen sein;
- schließlich sollte die Verbundhaftung an der Phasengrenzfläche in einem weiten Temperaturbereich und über lange Zeit durch Kontakt mit Ölen, Fetten, Lösemitteln oder Kraftstoffen nicht beeinträchtigt werden.

Verbundgegenstände aus Polyamid und Fluorpolymeren sind bekannt. So wird in der DE 25 10 096 ein Herstellungsverfahren offenbart, bei dem in Kontakt mit dem Fluorelastomer mindestens die Kontaktoberfläche des Polyamids geschmolzen wird. Die EP 0 767 190 A lehrt, dass Polyamide auf Fluorpolymeren besser haften, wenn sie einen erhöhten Gehalt an Aminogruppen besitzen. In der JP 01 177 447 A wird beschrieben, dass ein Gewebe mit Hilfe eines aminogruppenhaltigen Kautschuks als Haftvermittler mit einem Fluorkautschuk verbunden werden kann.

Entsprechende Verbundgegenstände können vorteilhaft hergestellt werden durch ein Verfahren zur Herstellung von Gegenständen aus mindestens zwei fest miteinander verbundenen Teilstücken aus Vulkanisaten einerseits und Polyamiden, Polyamidformmassen, Polyamidblends oder Faserverbundwerkstoffen mit Polyamidmatrix andererseits, wobei der Verbund in einem zweistufigen Prozess hergestellt wird, indem
a) der Thermoplast bzw. die Polyamidmatrix mindestens 30 Gew.-% Polyamid enthält und im Polyamid mindestens 30 % der Endgruppen Aminoendgruppen darstellen und
b) das Vulkanisat unter üblichen Vulkanisationsbedingungen im Kontakt mit dem Polyamidformkörper durch Vulkanisation eines Fluorkautschuk-Compounds hergestellt wird.

In einer bevorzugten Ausführungsform sind mindestens 50 % und besonders bevorzugt mindestens 70 % der Endgruppen im Polyamid Aminoendgruppen.

Polyamide im Sinne dieser Erfindung sind hochmolekulare Verbindungen, die in ihrer Hauptkette -CO-NH-Bindungen aufweisen. Sie werden in der Regel aus Diaminen und Dicarbonsäuren oder aus Aminocarbonsäuren durch Polykondensation oder aus Lactamen durch Polymerisation gewonnen. Es kommen alle Polyamide in Frage, die durch Erhitzen geschmolzen werden können. Die Polyamide können auch weitere Bestandteile enthalten, die durch Polykondensation eingebaut werden, wie z. B. Polyetherglykole oder Polyetherdiamine. Geeignete Polyamide sind PA 46, PA 6, PA 66, PA 610 und PA 612 sowie Mischungen daraus oder mit anderen Polyamiden wie z. B. PA 6,3-T. Derartige Polyamide sowie Herstellungsmethoden sind Stand der Technik.

Art und Konzentration der Endgruppen im Polyamid kann auf bekannte Weise durch Regelung des Molekulargewichts variiert werden. Ist ein Überschuß an Aminoendgruppen erwünscht, so wird vorteilhafterweise mit einer geringen Menge eines Diamins geregelt. Da dies für den Fachmann gängige Praxis ist, braucht hier nicht näher darauf eingegangen zu werden.

Polyamidformmassen im Sinne dieser Erfindung sind Aufbereitungen von Polyamiden, die zur Verbesserung der Verarbeitungseigenschaften oder zur Modifizierung der Gebrauchseigenschaften vorgenommen wurden. Polyamidformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übriger Zusatzstoffe insgesamt bis zu 10 %, jeweils bezogen auf die gesamte Formmasse, betragen.

Polyamidblends im Sinne dieser Erfindung sind Formmassen, die aus Polyamiden und anderen Polymeren sowie den bei den Polyamidformmassen gebräuchlichen Additiven zusammengesetzt sind. Die Polymerbestandteile können ineinander löslich sein oder der eine Polymerbestandteil kann in dem anderen dispers verteilt sein oder beide können miteinander interpenetrierende Netzwerke bilden. Bevorzugte Polyamidblends im Sinne dieser Erfindung sind Mischungen aus Polyamiden und Polyphenylenether, in denen der Polyphenylenether dispers im Polyamid verteilt ist. Solche Formmassen werden durch Schmelzen und Vermischen von mindestens 30 Gewichtsprozent eines Polyamids mit bis zu 70 Gewichtsprozent eines Polyphenylenethers hergestellt. Formmassen auf Basis von Polyamiden und Polyphenylenethern werden z. B. in den DE-OSS 30 27 104 und 35 18 278 sowie in der EP-A-0 147 874 und der EP-A-0 024 120 beschrieben. Es ist dem Fachmann bekannt, daß diese Formmassen üblicherweise einen Verträglichkeitsvermittler enthalten.

Weiterhin kommen auch schlagzähmodifizierte Polyamide in Frage, z. B. Polyamide mit darin dispers verteiltem Kautschuk.

Als Faserverbundwerkstoffe mit Polyamidmatrix sollen Werkstoffe verstanden werden, die aus ungeschnittenen Verstärkungsfasern oder Geweben daraus einerseits und einer Matrix aus Polyamiden, Polyamidformmassen oder Polyamidblends andererseits zusammengesetzt sind.

Faserverbundwerkstoffe mit einer Matrix aus Polyamiden, Polyamidformmassen oder Polyamidblends können auf verschiedene Weise hergestellt werden; beispielsweise können mit Polyamiden imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyamidfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Die erfindungsgemäß eingesetzten Kautschukcompounds enthalten einen Fluorkautschuk (FPM), der in bekannter Weise hergestellt werden kann. Geeignete Fluorkautschuke sind beispielsweise in K. Nagdi, Gummi-Werkstoffe, Seite 254 ff., Vogel-Verlag Würzburg 1981 sowie in The Vanderbilt Rubber Handbook, 13th Edition, pp. 211 ff., Vanderbilt Company Inc., Norwalk, Conn. 1990, beschrieben. Beispielhaft genannt seien Vinylidenfluorid/Hexafluorpropen-Copolymere, Vinylidenfluorid/Hexafluorpropen/Tetrafluorethen-Terpolymere oder Vinylidenfluorid/Tetrafluorpropen/Perfluormethylvinylether-Terpolymere.

Geeignete Fluorkautschuke werden beispielsweise von DuPont unter der Bezeichnung Viton, von 3M unter dem Handelsnamen Fluorel, von Montefluos unter der Bezeichnung Tecnoflon und von Daikin Kogyo Co., Japan, unter der Bezeichnung Dai-el hergestellt. Die Wahl der Kautschuktype richtet sich nach den gewünschten Vulkanisateigenschaften.

Neben dem Kautschuk können die FPM-Mischungen eine begrenzte Anzahl von Zusatzstoffen enthalten wie beispielsweise Füllstoffe, Farbpigmente, Verarbeitungshilfsmittel, Gleitmittel oder Metalloxide als Säureaufnehmer. Sie enthalten darüber hinaus ein Vulkanisiermittel.

Als Füllstoff können verschiedene Ruße und mineralische Füllstoffe eingesetzt werden. Als Verarbeitungshilfsmittel und Weichmacher kann u. a. flüssiger Fluorkautschuk verwendet werden. Als Gleitmittel sind u. a. Camauba-Wachs und niedermolekulares Polyethylen geeignet. In der Regel werden allen FPM-Mischungen Metalloxide, wie z. B. Magnesiumoxid, zugesetzt. Diese führen zu einem hohen Vernetzungsgrad und wirken gleichzeitig als Aufnehmer für Fluorwasserstoff, der während der Vulkanisation entsteht.

Für FPM-Mischungen geeignete Vernetzungsmittel basieren u. a. auf Bisphenolen und Phosphoniumverbindungen. Diese sind oftmals bereits im Basispolymer enthalten.

FPM-Typen, die kein Vernetzungsmittel enthalten, werden in der Regel mit Diaminverbindungen, wie z. B. Hexamethylendiamincarbonat, oder mit organischen Peroxiden in Anwesenheit von z. B. Triallylisocyanurat vernetzt.

Hinsichtlich geeigneter Zusatzstoffe und Vernetzungsmittel empfiehlt es sich, den Angaben der FPM-Hersteller, z. B. in den jeweiligen Produktbroschüren, zu folgen. Die Erfindung ist nicht auf bestimmte Vernetzungsmittel beschränkt.

Die Gegenstände aus den Polyamiden, Polyamidformmassen, Polyamidblends oder Faserverbundwerkstoffen einerseits und Fluorkautschuk-Compounds andererseits werden zweistufig hergestellt.

Beim zweistufigen Prozeß wird zunächst das steife Formteil durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus einer Polyamidformmasse, z. B. ein Rohr, mit der Kautschukmasse ummantelt und gegebenenfalls unter Druck ausvulkanisiert. Entsprechend verfährt man mit Platten aus Polyamidformmassen oder aus Faserverbundwerkstoffen mit Polyamidmatrix. Die optimalen Vulkanisationsbedingungen hängen von der gewählten Kautschukmischung, insbesondere ihrem Vulkanisationssystem, und der Formteilgestaltung ab. So liegen geeignete Temperaturen im Werkzeug im Bereich von 140 bis 210 °C. Wenn der Enveichungsbereich der harten Komponente es zuläßt, wählt man Temperaturen im oberen Bereich, z. B. zwischen 170 und 210 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Als grober Richtwert kann gelten, daß bei Temperaturen zwischen 150 °C und 200 °C die Vulkanisation in 2 bis 15 Minuten beendet ist.

Die Verbunde werden anschließend in der Regel noch, wie bei Fluorelastomeren üblich, nachvulkanisiert, wobei die vorvulkanisierten Teile beispielsweise in Heizschränken mit Heißluftumwälzung und Zufuhr von Frischluft oder Stickstoff drucklos getempert werden, um die Vemetzungsreaktion zu beenden. Typische Temperungsbedingungen sind 24 h bei 200 bis 260 °C.

Der erfindungsgemäß hergestellte Verbund ist so stark, daß es im Testfalle üblicherweise zu einem Kohäsionsbruch im Vulkanisat, nicht jedoch zu einer Trennung an der Phasengrenzfläche kommt.

Die in den Verbundkörpern enthaltenen Vulkanisate zeichnen sich durch eine hervorragende Beständigkeit gegenüber hohen Temperaturen, Ozon, Sauerstoff, Mineralölen, Kraftstoffen, Aromaten und organischen Lösemitteln aus.

Anwendungszwecke für die erfindungsgemäßen Verbunde sind z. B. gummibeschichtete Walzen, Flansche, Rohr- und Schlauchkupplungen, Dichtungsrahmen, Dichtungen, insbesondere Wellendichtringe, Laufrollen, Kupplungsund Bremsscheiben, Membranen sowie coextrudierte Rohre und Schläuche.

### Experimenteller Teil

1. Für die harte Komponente werden folgende Polyamid-Formmassen verwendet:
   1.1. Handelsübliches Polyamid 612 mit 20 Gew.-% Kurzglasfasern. Das Verhältnis von Amino- zu Carboxylendgruppen beträgt ca. 5 : 1.
   1.2. Blend aus 50 Gew.-Tln. PA 66 und 10 Gew.-Tln. PA 6,3-T mit 40 Gew.-Tln. Kurzglasfasem. PA 6,3-T wird durch Polykondensation von Terephthalsäure bzw. Terephthalsäurederivaten und trimethylsubstituiertem Hexamethylendiamin hergestellt. Das Verhältnis von NH₂- zu COOH-Gruppen in diesem Blend beträgt ca. 5 1.
   1.3. Handelsübliches PA 612 mit einem Verhältnis von NH₂- zu COOH-Gruppen von ca. 1 : 10 (nicht im Rahmen der Erfindung).
   1.4. Analog zu 1.2.; lediglich das Verhältnis von NH₂- zu COOH-Endgruppen beträgt hier ca. 1 : 6 (nicht im Rahmen der Erfindung).
2. Verwendete Kautschuke:
   2.1. Viton A
      Es handelt sich um einen Fluorkautschuk der Fa DuPont de Nemours, Genf, Schweiz. Die Eigenschaften des Produktes sind der Produktinformation "Viton Fluorkautschuk" zu entnehmen.
   2.2. Viton B 651 C
      Es handelt sich um einen Fluorkautschuk (Terpolymer) der Fa. DuPont de Nemours, Genf, Schweiz, mit integriertem Vernetzungsmittel auf Basis von aromatischen Dihydroxyverbindungen. Die Eigenschaften des Produktes sind der Produktinformation "Viton Fluorkautschuk" zu entnehmen.
   2.3. Dai-el G 763
      Es handelt sich um einen Fluorkautschuk der Fa. Daikin Kogyo Co., Japan, mit integriertem Vernetzungsmittel auf Basis von aromatischen Dihydroxyverbindungen. Die Eigenschaften des Produktes sind den entsprechenden Produktinformationen zu entnehmen.
3. Kautschukcompounds:
   Die verwendeten Kautschuke werden mit Zusatzstoffen gemischt; die Zusammensetzung der Compounds ist in der Tabelle 1 wiedergegeben.

**Tabelle 1:**

| Zusammensetzung der Kautschukmischungen | | | | |
|---|---|---|---|---|
| Beispiel | 3.1 | 3.2 | 3.3 | 3.4 |
| Kautschuk 2.1 | 100,0 | | | |
| Kautschuk 2.2 | | 100,0 | | |
| Kautschuk 2.3 | | | 100,0 | 100,0 |
| Maglite D 1) | | | 3,0 | 3,0 |
| Maglite Y 2) | 15,0 | 15,0 | | |
| Blance Fixe Micro 3) | | 15,8 | 10,0 | |
| Ruß N 990 4) | 10,0 | | 5,6 | 25 |
| Lunacerra C 445) | | 2,0 | 0,1 | 0,5 |
| Diak Nr. 1 6) | 1,5 | | | |
| Calciumhydroxid | | | 6,0 | 6,0 |
| Erläuterungen zu Tabelle 1: | | | | |

| | | | | |
|---|---|---|---|---|
| 1) Maglite D ist ein hochaktives Magnesiumoxid der Fa. Merck & Co. Inc., Rahway, New Jersey. | | | | |
| 2) Maglite Y ist ein niedrigaktives Magnesiumoxid der Fa. Merck & Co. Inc., Rahway, New Jersey. | | | | |
| 3) Blance Fixe Micro ist ein Bariumsulfat, wie es von verschiedenen Herstellern angeboten wird. | | | | |
| 4) Ruß N 990 ist ein niedrigaktiver Ruß, der von der Degussa AG, Hanau, angeboten wird. | | | | |
| 5) Bei Lunacerra C 44 handelt es sich um ein Paraffin-Wachs (Hartwachs). | | | | |
| 6) Diak Nr. 1 ist ein Vemetzungsmittel auf Basis Hexamethylendiamincarbamat der Fa. DuPont de Nemours, Genf. | | | | |

Zur Demonstration der Verbundwirkung werden Probekörper hergestellt, indem man gemäß DIN 53531, Teil 1, aus dem Thermoplast eine Kunststoffplatte herstellt, diese zu einem Drittel mit einer Teflonfolie abdeckt, auf die Platte ein passendes Kautschukfell legt, den Verbund nach dem Preßverfahren herstellt und schließlich Probekörper mit einer Breite von 25 mm aussägt. Daraufhin wird ein Schälversuch durchgeführt. Dabei wird das Gummiteil, das durch die Teflonfolie bei der Vulkanisation vom Polyamidmaterial getrennt gehalten wurde, so eingespannt, daß bei den Schälversuchen der Gummistreifen senkrecht zu der Thermoplastfläche abgezogen wird. Die Ergebnisse sind in den Tabellen 2 und 3 wiedergegeben.

**Tabelle 2**

| Eigenschaften der erfindungsgemäßen Verbundwerkstoffe; Schälversuch in Anlehnung an DIN 53531 / 53539 | | | | | |
|---|---|---|---|---|---|
| Beispiel | Kautschuk | Polyamidwerkstoff | Vulk.-Temp. in °C | Vulk.-Zeit in Minuten | Trennkraft in N/mm |
| 4.1 | 3.1 | 1.1 | 180 | 10 | 7,7 |
| 4.2 | 3.1 | 1.2 | 200 | 5 | 8,1 |
| 4.3 | 3.2 | 1.1 | 180 | 10 | 6,4 |
| 4.4 | 3.3 | 1.2 | 200 | 5 | 7,5 |
| 4.5 | 3.4 | 1.1 | 180 | 10 | 8,0 |
| 4.6 | 3.4 | 1.2 | 200 | 5 | 8,2 |

Bei allen Versuchen erfolgt eine Trennung in der Vulkanisatschicht (Kohäsionsbruch) und nicht in der Grenzfläche Kunststoff/Vulkanisat.

Mit den beiden Vergleichsformmassen 1.3 und 1.4 können hingegen keine ausreichenden Verbundfestigkeiten erzielt werden, d. h. eine Trennung des Verbundes erfolgt ohne großen Kraftaufwand in der Grenzfläche Kunststoff/Vulkanisat, siehe Tabelle 3.

**Tabelle 3**

| Nicht erfindungsgemäße Verbunde; Schälversuch in Anlehnung an DIN 53531/53539 | | | | | |
|---|---|---|---|---|---|
| Beispiel | Kautschuk | Polyamid werkstoff | Vulk.-Temp. in °C | Vulk.-Zeit in Minuten | Trennkraft in N/mm |
| A | 3.1 | 1.3 | 180 | 10 | 1,7 |
| B | 3.1 | 1.4 | 200 | 5 | 1,1 |
| C | 3.2 | 1.3 | 180 | 10 | 1,4 |

## Patentansprüche

1. Verfahren zur Herstellung von Gegenständen aus mindestens zwei fest miteinander verbundenen Teilstücken aus einem Vulkanisat einerseits und einem Thermoplast oder Faserverbundwerkstoff mit Thermoplastmatrix andererseits, wobei der Thermoplast ein Polyamid, eine Polyamidformmasse oder ein Polyamidblend ist,
**dadurch gekennzeichnet, dass** der Verbund in einem zweistufigen Prozess hergestellt wird, indem
a) zunächst ein Formteil aus einem Thermoplast hergestellt wird, der mindestens 30 Gew.-% eines oder mehrerer Polyamide enthält, wobei im Polyamid mindestens 30 % der Endgruppen Aminoendgruppen darstellen, und wobei zumindest eines der Polyamide ausgewählt ist aus der Gruppe PA46, PA6, PA66, PA610 und PA612
und
b) das Vulkanisat unter üblichen Vulkanisationsbedingungen im Kontakt mit dem Polyamidformkörper durch Vulkanisation eines Fluorkautschuk-Compounds bei einer Temperatur von 140 bis 210 °C hergestellt wird.

2. Verfahren gemäß Anspruch 1,
**dadurch gekennzeichnet,**
**daß** im Polyamid mindestens 50 % der Endgruppen Aminoendgruppen sind.

3. Verfahren gemäß Anspruch 1,
**dadurch gekennzeichnet,**
**daß** im Polyamid mindestens 70 % der Endgruppen Aminoendgruppen sind.

4. Verfahren gemäß einem der vorhergehenden Ansprüche,
**dadurch gekennzeichnet,**
**daß** das Fluorkautschuk-Compound als Zusatzstoffe Füllstoffe, Farbpigmente, Verarbeitungshilfsmittel, Gleitmittel und/oder Metalloxide sowie ein Vulkanisiermittel enthält.

## Claims

1. A method of producing articles comprising at least two subcomponents which are firmly joined to one another and comprise a vulcanizate on the one hand and a thermoplastic or a fibre composite material having a thermoplastic matrix on the other hand, the thermoplastic being a polyamide, a polyamide moulding composition or a polyamide blend, **characterized in that** the composite is produced in a two-stage process in which
a) a moulding is firstly produced from a thermoplastic comprising at least 30% by weight of one or more polyamides in which at least 30% of the end groups are amino end groups, at least one of the polyamides being selected from PA46, PA6, PA66, PA610 and PA612,
and
b) the vulcanizate is produced under conventional vulcanization conditions in contact with the polyamide moulding by vulcanization of a fluororubber compound at a temperature of from 140 to 210°C.

2. A method according to claim 1, **characterized in that** at least 50% of the end groups in the polyamide are amino end groups.

3. A method according to claim 1, **characterized in that** at least 70% of the end groups in the polyamide are amino end groups.

4. A method according to any one of the preceding claims, **characterized in that** the fluororubber compound comprises as additives fillers, colour pigments, processing aids, lubricants and/or metal oxides and also a vulcanizing agent.

## Revendications

1. Procédé de production d'objets à base d'au moins deux parties constitutives assemblées solidement l'une à l'autre, à base d'un produit de vulcanisation d'une part et d'un thermoplaste ou d'une matière d'assemblage en fibres, avec une matière en thermoplaste d'autre part, dans lequel le thermoplaste est un polyamide, une masse moulée de polyamide ou un mélange de polyamide,
**caractérisé en ce que**
le composite est préparé dans un processus en deux étapes dans lequel :
a) en premier lieu on prépare une pièce moulée à base d'un thermoplaste qui contient au moins 30 % en poids d'un ou plusieurs polyamides, pour lesquels dans le polyamide au moins 30 % des groupes terminaux représentent des groupes terminaux aminés et au moins un des polyamides est choisi dans le groupe du PA 46, du PA 6, du PA 66, du PA 610 et du PA 612, et
b) le produit de vulcanisation est produit dans les conditions usuelles de vulcanisation en contact avec les solides moulés de polyamide par vulcanisation d'une composition de caoutchouc fluoré à une température allant de 140 à 210°C.

2. Procédé conformément à la revendication 1,
**caractérisé en ce que**
dans le polyamide au moins 50 % des groupes terminaux sont des groupes terminaux aminés.

3. Procédé conformément à la revendication 1,
**caractérisé en ce que**
dans le polyamide au moins 70 % des groupes terminaux sont des groupes terminaux aminés.

4. Procédé conformément à l'une quelconque des revendications précédentes,
**caractérisé en ce que**
la composition de caoutchouc fluoré renferme comme additifs, des substances de charge, des pigments colorés, des adjuvants de façonnage, des agents de glissement et/ou des oxydes métalliques ainsi qu'un agent de vulcanisation.
